# FASCICULE DE BREVET EUROPEEN

(11) **EP 3 620 500 B1**
(45) Date de publication et mention de la délivrance du brevet: **07.10.2020**
(21) Numéro de dépôt: 19196175.4
(22) Date de dépôt: 09.09.2019
(51) Int. Cl.: C10L 1/32, C10L 1/00, C10L 5/40, C10L 9/00

(54) **PROCÉDÉ DE TRAITEMENT DE POIX D'HUILE DE TALL, COMPOSITION COMBUSTIBLE COMPRENANT DE POIX D'HUILE DE TALL, UTILISATION COMME COMBUSTIBLE D'UNE COMPOSITION COMPRENANT DE POIX D'HUILE DE TALL ET PROCÉDÉ DE COMBUSTION**
VERFAHREN ZUR BEHANDLUNG VON TALLÖLPECH, BRENNSTOFFZUSAMMENSETZUNG ENTHALTEND TALLÖLPECH, VERWENDUNG EINER ZUSAMMENSETZUNG ENTHALTEND TALLÖLPECH ALS BRENNSTOFF UND VERBRENNUNGSVERFAHREN
PROCESS FOR PROCESSING TALL OIL PITCH, FUEL COMPOSITION COMPRISING TALL OIL PITCH, USE AS FUEL OF A COMPOSITION COMPRISING TALL OIL PITCH AND COMBUSTION PROCESS

(30) Priorité: 10.09.2018 FR 1858091
(43) Date de publication de la demande: 11.03.2020
(73) Titulaire: Total Marketing Services, 92800 Puteaux (FR)
(72) Inventeur: HAVIL, Patrick, 92100 Boulogne Billancourt (FR); JULIEN, Laurent, 69530 BRIGNAIS (FR)
(74) Mandataire: Fédit-Loriot

(56) Documents cités:
- EP-A1- 1 568 760
- EP-A1- 3 263 675
- WO-A1-2014/098692
- CHIU YING CHECH: "TALL OIL PITCH IN CHEMICAL RECOVERY", SOCIETY OF PETROLEUM ENGINEERS JOURNAL, DALLAS, TX, US, vol. 20, no. 6, 1 décembre 1980 (1980-12-01), pages 439-449, XP009501155, ISSN: 0197-7520, DOI: 10.2118/7578-PA

## Description

### DOMAINE TECHNIQUE

La présente invention concerne un procédé de traitement de poix d'huile de tall (« tall oil pitch » en terminologie anglosaxone), notamment pour obtenir un combustible liquide issu de la biomasse.

L'invention concerne également l'utilisation en tant que composition combustible du produit obtenu par le procédé de purification selon l'invention.

L'invention concerne également une composition combustible, notamment liquide, obtenue par le procédé de purification selon l'invention.

Le combustible de la présente invention est plus particulièrement adapté pour une utilisation dans des installations de combustion consommant exclusivement, seuls ou en mélange, du gaz naturel, des gaz de pétrole liquéfiés, du fioul domestique, du charbon, des fiouls lourds, de la biomasse. Il ne s'agit donc pas d'un carburant.

Notamment, la composition combustible de la présente invention peut être utilisée dans les installations de combustion classées dans la rubrique 2910 A (et a fortiori 2910 B et 2910 C) de la nomenclature des installations classées pour la protection de l'environnement (nomenclature ICPE) définie dans le décret n° 2013-814 du 11 septembre 2013, publié dans le journal Officiel de la République Française du 13 septembre 2013. Notamment, la composition combustible de la présente invention peut être utilisée dans des installations de combustion dépourvues de traitement de fumées de type dépoussiéreur tout en respectant les valeurs limites d'émissions.

### ART ANTERIEUR

L'industrie du raffinage de pétrole, au moins en Europe de l'ouest, a tendance à diminuer la production de fioul lourd, en raison de la baisse de la demande. Cette baisse est liée au passage à des sources d'énergie alternatives par les clients, notamment du gaz naturel, ainsi qu'aux contraintes environnementales qui tendent à limiter les quantités de NOx, SO₂ et poussières émises dans l'atmosphère. Pour être en adéquation avec les prescriptions règlementaires les plus sévères, les installations de combustion de forte puissance devraient recourir à un fioul exempt d'azote, soufre et cendres ou à des techniques de traitement de fumées, ce qui n'est pas viable économiquement par rapport à d'autres énergies, telles que le gaz naturel par exemple.

De plus, le fioul lourd nécessite généralement d'être stocké à une température voisine de 50°C afin de le rendre pompable et doit être pulvérisé à une température comprise entre 85 et 130°C selon la technologie des brûleurs, en lien avec la viscosité du produit. Ces étapes de chauffage représentent une consommation énergétique non négligeable.

En outre, le point éclair du fioul lourd (typiquement compris entre 70 et 120°C) proche de sa température de mise en œuvre, peut engendrer des contraintes supplémentaires en termes de sécurité (atmosphères explosives).

Des recherches ont donc été menées afin d'obtenir des combustibles de substitution du fioul lourd qui soient moins contraignants lors de leur mise en œuvre et qui permettent d'atteindre les exigences de plus en plus élevées relatives aux émissions atmosphériques résultant de sa combustion.

Il existe ainsi des compositions combustibles à base de fioul lourd et de produits élaborés à partir de la biomasse, tel que par exemple les compositions combustibles élaborées par la demanderesse et décrites dans les documents WO2013/098524 et WO2014/102492. Les compositions combustibles décrites dans WO2013/098524 sont un mélange de fioul lourd et d'huile de tall ou d'une huile de neutralisation (composition d'acides gras neutralisés par une base puis acidifiés), l'huile de tall et l'huile de neutralisation permettant de stabiliser la composition combustible. Les compositions décrites dans WO2014/102492 sont des mélanges d'une pâte de neutralisation et d'un combustible lourd d'origine pétrolière. Ces différentes compositions combustibles ne sont cependant pas entièrement issues de la biomasse.

Il existe également des compositions combustibles composées de poix d'huile de tall et d'un ou plusieurs solvants de type huile légère de pin et/ou essence de térébenthine. De telles compositions sont appelées « poix d'huile de tall diluée » ou « poix diluée » dans la suite de la présente demande. L'ajout de solvant à la poix d'huile de tall est nécessaire pour abaisser la viscosité de la poix d'huile de tall pure et ainsi la rendre manipulable pour la combustion (pompage, stockage, circulation dans les boucles de préparation...). Néanmoins, la présence de solvant augmente notablement le coût de la composition. Ainsi, les produits provenant de poix d'huile de tall ne sont pas utilisables directement sans mélange avec des quantités notables de solvant, ni sans traitement de fumées car ils induisent des émissions de particules trop importantes pour respecter les contraintes environnementales. Cela est dû à la présence de cendres (métaux principalement) en quantité trop importante dans le produit. Actuellement, ces produits ne peuvent ainsi être brûlés que dans des installations équipées de dispositifs de traitement des fumées, ce qui ne représente qu'une très faible proportion des installations existantes de petite et moyenne puissance. De plus, la teneur en cendres importante du produit engendre la formation de dépôts dans les chaudières et une diminution rapide du rendement des installations.

Il existe donc un besoin pour un combustible de substitution du fioul lourd qui soit moins contraignant lors de sa mise en œuvre, qui permette d'atteindre les exigences de plus en plus élevées relatives aux émissions atmosphériques résultant de sa combustion, notamment sans dispositif de traitement des fumées de combustion, et qui soit entièrement issu de la biomasse, à moindre coût.

### BREF RESUME DE L'INVENTION

La demanderesse propose un procédé de traitement de poix d'huile de tall permettant d'obtenir de la poix d'huile de tall traitée pouvant être utilisée comme composition combustible, notamment liquide. Cette composition peut se substituer à un fioul, notamment pour être brûlée dans une chaudière industrielle ou un four industriel en lieu et place d'un fioul, sans nécessiter de traitement des fumées pour respecter les contraintes environnementales en termes d'émission de poussières. La poix d'huile de tall traitée est un produit directement issu de la biomasse. Elle peut être utilisée en tant que composition combustible. On entend par « directement issue de la biomasse », le fait qu'elle ne contient pas de combustible fossile. Cela n'exclut pas le fait que cette composition puisse contenir d'autres produits, par exemple des additifs, non issus de la biomasse.

Un premier objet de l'invention concerne ainsi un procédé de traitement de poix d'huile de tall comprenant :
(A) une étape de fourniture de poix d'huile de tall à une température allant de 40 à 80°C,
(B) au moins une étape de décantation au cours de laquelle la poix d'huile de tall fournie à l'étape (A) est soumise successivement à :
   - une étape de refroidissement à une température allant de -20 à 25°C,
   - une étape de réchauffage à une température de 35 à 70°C, pendant une durée suffisante pour séparer la poix d'huile de tall en au moins une phase légère surnageante et une phase lourde plus lourde que ladite au moins une phase légère,
(C) une étape de récupération de ladite au moins une phase légère et de la phase lourde formées au cours de l'étape (B), ladite au moins une phase légère constituant de la poix d'huile de tall traitée.

Le procédé selon l'invention permet d'obtenir une phase légère présentant une teneur en cendres inférieure à la teneur en cendres de la poix d'huile de tall non traitée. La réduction de la teneur en cendres peut être de l'ordre de 40 à 70%, voire de 50 à 70% et même de 60 à 70%.

Dans un mode de réalisation, l'étape (B) peut être mise en œuvre au moins deux fois successivement avant l'étape de récupération (C). Ceci peut permettre de réduire davantage la teneur en cendres de la phase légère récupérée au cours de l'étape de récupération (C).

Dans un mode de réalisation, en combinaison ou en alternative, le procédé peut comprendre :
(D) au moins une deuxième étape de décantation au cours de laquelle ladite au moins une phase légère récupérée à l'étape (C) est soumise successivement à :
   - une étape de refroidissement à une température allant de -20 à 25°C,
   - une étape de réchauffage à une température de 35 à 70°C, pendant une durée suffisante pour séparer ladite phase légère en au moins une deuxième phase légère surnageante et une deuxième phase lourde plus lourde que ladite deuxième phase légère,
(E) une deuxième étape de récupération de ladite deuxième phase légère et de la deuxième phase lourde formées au cours de l'étape (D), ladite deuxième phase légère constituant de la poix d'huile de tall traitée.

La deuxième phase légère ainsi récupérée peut alors comprendre une teneur en cendres davantage réduite.

Afin de réduire encore plus la teneur en centres, la deuxième étape de décantation (D) peut être mise en œuvre au moins deux fois successivement avant la deuxième étape de récupération (E).

En variante ou en combinaison, ladite au moins une deuxième phase légère peut être soumise successivement aux étapes de refroidissement et de réchauffage de l'étape (D) pendant une durée suffisante pour séparer ladite au moins une deuxième phase légère en au moins une troisième phase légère surnageante et une troisième phase lourde plus lourde que ladite au moins une troisième phase légère, puis à l'étape de récupération (E) pour séparer ladite au moins une troisième phase légère.

La phase lourde récupérée à l'étape (C), la deuxième phase lourde ou la troisième phase lourde récupérées à l'étape (E) du procédé selon l'invention présentent des teneurs en cendres notables. Ces phases peuvent être traitées afin de réduire cette teneur en cendres. Ainsi, dans un mode de réalisation, la phase lourde récupérée à l'étape (C), la deuxième phase lourde ou la troisième phase lourde récupérées à l'étape (E), peut être soumise à au moins une étape (F) de filtration. Ceci peut permettre de réduire la teneur en cendres de ces phases lourdes, notamment à une teneur en cendres similaire à celle d'une phase légère.

La phase légère, la deuxième phase légère ou la troisième phase légère récupérée par le procédé selon l'invention présente une teneur en cendres réduite par rapport à la teneur en cendres de la poix d'huile de tall fournie à l'étape (A). Cette réduction peut être de 40 à 70%. A titre d'exemple, une poix d'huile de tall fournie à l'étape (A) peut présenter une teneur en cendres de 0,1 à 0,6%m, notamment mesurée suivant la norme NF EN ISO 6245 :2001. Tel que défini dans cette norme, les cendres peuvent provenir de composés métalliques solubles dans l'huile ou dans l'eau, ou de solides étrangers tels que la poussière ou la rouille.

Dans un mode de réalisation, la teneur en cendres de la phase légère, de la deuxième phase légère ou de la troisième phase légère récupérée par le procédé selon l'invention, peut être inférieure ou égale à 0,18%m, 0,17%m, 0,16%m, 0,15%m, 0,14%m, 0,13%m, 0,12%m, 0,11%m, 0,10%m, 0,09%m, 0,08%m, 0,07%m, 0,06%m, 0,05%m, notamment mesurée suivant la norme NF EN ISO 6245 :2001. Avantageusement, la teneur en cendres peut être inférieure ou égale à 0,10%m, voire inférieure ou égale à 0,05%m. La teneur en cendres de la phase légère, de la deuxième phase légère ou de la troisième phase légère, notamment mesurée suivant la norme précédemment citée, peut être supérieure ou égale à 0.01%m, 0.02%m, 0.03%m, 0.04%m ou 0.05%m. La teneur en cendres de la phase légère, de la deuxième phase légère ou de la troisième phase légère, peut être de 0.01 à 0.18%m ou toute autre gamme définie par toute combinaison des bornes précédemment listées.

Pour une teneur en cendres telle que précédemment mentionnée, la phase légère, la deuxième phase légère ou la troisième phase légère peut présenter une ou plusieurs des caractéristiques suivantes, dont la valeur peut être dans l'une quelconque des gammes citées ci-après :
- une viscosité cinématique à 100°C, notamment mesurée suivant la norme NF EN ISO 3104 :1994, de 21 à 30 mm²/s, de 22 à 28 mm²/s, de 22 à 26 mm²/s ou dans une gamme définie par toute autre combinaison des bornes précédemment listées,
- une viscosité cinématique à 50°C, notamment mesurée suivant la norme NF EN ISO 3104 :1994, de 220 à 227 mm²/s, de 221 à 227 mm²/s, de 222 à 227 mm²/s ou dans une gamme définie par toute autre combinaison des bornes précédemment listées,
- une viscosité cinématique à 20°C, notamment mesurée suivant la norme NF EN ISO 3104 :1994, de 450 à 460 mm²/s, de 451 à 459 mm²/s, de 452 à 458 mm²/s, de 453 à 457 mm²/s ou dans une gamme définie par toute autre combinaison des bornes précédemment listées,
- une masse volumique à 15°C, notamment mesurée suivant la norme NF EN ISO 12185 :1996, de 979 à 987 kg/m³, de 980 à 986 kg/m³, de 981 à 985 kg/m³ ou dans une gamme définie par toute autre combinaison des bornes précédemment listées,
- un point d'écoulement, notamment mesuré suivant la norme ISO 3116 :1994, de 10 à 20°C, 11 à 19°C, de 12 à 18°C, de 13 à 17 °C, ou dans une gamme définie par toute autre combinaison des bornes précédemment listées.

La phase légère, la deuxième phase légère ou la troisième phase légère obtenue par le procédé selon l'invention peut être utilisée comme composition combustible.

Ainsi, l'invention concerne une composition combustible, notamment liquide, comprenant de 70 à 100 % en masse de poix d'huile de tall présentant une teneur en cendres inférieure ou égale à 0,18%m, avantageusement inférieure ou égale à 0,1 %m. La poix d'huile de tall de la composition combustible peut notamment présenter une ou plusieurs des caractéristiques d'une phase légère précédemment décrite. Autrement dit, la poix d'huile de tall de la composition combustible peut être obtenue par le procédé selon l'invention et peut être constituée d'une phase légère.

La composition selon l'invention présente l'avantage d'être issue uniquement de la biomasse : elle ne comprend pas de composants combustibles fossiles. La poix d'huile de tall est le produit récupéré en fond de colonne lors du fractionnement de l'huile de tall brute par distillation, l'huile de tall brute étant un produit issu de la fabrication du papier par le procédé Kraft.

La composition présente également l'avantage d'émettre des émissions faibles lors de sa combustion, respectant des contraintes environnementales élevées. Enfin, son coût est faible, la poix d'huile de tall étant un co-produit du traitement de bois, notamment résineux, par exemple de l'industrie papetière.

Dans d'autres modes de réalisation, la teneur en poix d'huile de tall de la composition combustible peut être de 71 à 99%m, de 72 à 98%m, de 73 à 97%m, de 74 à 96%m, de 75 à 95%m, de 75 à 94%m, de 75 à 93%m, de 75 à 92%m, de 75 à 91%m ou de 75 à 90%m ou dans une gamme définie par toute autre combinaison des bornes précédemment listées. Lorsqu'elle ne contient pas 100%m de poix d'huile de tall traitée, la composition combustible peut comprendre pour atteindre 100%m une ou plusieurs coupes plus légères, notamment issues du traitement de l'huile de tall (acides gras, huile de tall distillée), un ou plusieurs additifs, ou leurs mélanges. La ou les coupes plus légères que la poix d'huile de tall sont notamment des coupes séparées par distillation de l'huile de tall, plus particulièrement choisies parmi l'huile légère de tête de colonne, les acides gras, l'huile de tall distillée.

La composition combustible selon l'invention peut ainsi comprendre un ou plusieurs additifs, de préférence choisis parmi :
- un additif de combustion ayant pour effet de diminuer les émissions de poussières ; ce sont généralement des additifs contenant des sels de métaux (fer ou/et calcium ou/et cérium) solubilisés dans une matrice d'acides gras et d'hydrocarbures,
- un additif ayant pour effet d'améliorer la stabilité ; ces additifs contiennent généralement des agents dispersant solubilisés dans une matrice d'acides gras et d'hydrocarbures.

La teneur totale en additif(s) de la composition combustible peut être de 0,01 à 0,5%m, de préférence de 0,2 à 0,05%m.

La composition précédemment définie, comprenant de la poix d'huile de tall susceptible d'être obtenue par le procédé selon l'invention, peut être utilisée comme combustible.

Ainsi, l'invention concerne également un procédé de combustion d'un combustible dans une installation de combustion, notamment de type 2910A ou 2910B ou 2910C selon la nomenclature ICPE, dans laquelle on brûle une composition combustible selon l'invention. Notamment, l'installation de combustion peut être dépourvue d'un dispositif de traitement de fumées. Autrement dit, la composition selon l'invention peut brûler en respectant les contraintes règlementaires à l'émission sans nécessiter de recours à de coûteux traitements de fumées.

### DESCRIPTION DETAILLEE DE L'INVENTION

Le procédé Kraft est un procédé de transformation du bois qui permet d'isoler d'un côté la pulpe de bois utile pour l'industrie papetière et de l'autre une liqueur noire contenant notamment l'huile de tall brute.

Au cours du procédé Kraft, les copeaux de bois sont habituellement chauffés en présence de sulfure de sodium en solution aqueuse alcaline (liqueur blanche). Ce traitement se fait en général à une température de 130 à 180°C, sous pression pendant 2 à 5 heures suivant l'essence du bois dans un appareil appelé parfois « digesteur ».

On obtient de la pâte à papier baignant dans une liqueur noire. Après séparation de la liqueur noire et décantation, on observe la formation d'une couche supérieure alcaline appelée savon (« tall oil soap »), qui peut être isolée de la liqueur noire.

Ce savon d'huile de tall est ensuite acidifié, par exemple par de l'acide sulfurique, pour produire l'huile de tall brute. L'huile de tall brute comprend principalement des acides résiniques, des acides gras et des composés non saponifiables. Une acidification insuffisante peut conduire à une huile de tall brute contenant des sels métalliques, généralement de sodium. Cette caractéristique est liée au fait que l'huile de tall comprend majoritairement des composés hydrocarbonés fonctionnalisés par des acides organiques, essentiellement des acides carboxyliques, parfois des phénols. L'huile de tall comprend aussi des stérols non saponifiables, des alcools gras et d'autres dérivés d'hydrocarbures alkylés.

Le reste de la liqueur noire est réduite par évaporation. Les gaz récupérés lors de cette évaporation ainsi que ceux récupérés lors du chauffage du bois dans la liqueur blanche contiennent les essences terpéniques. Les essences brutes récupérées par condensation de ces gaz, aussi appelées essences de papeterie ou « Crude sulfate turpentine » (CST) en terminologie anglosaxone, contiennent essentiellement les composés suivants : α-pinène, β-pinène, Δ³ carène, myrcène, dipentène et éventuellement des dérivés moins fréquents, comme camphène et autres. Ces terpènes peuvent être séparés par fractionnement.

L'huile de tall, autrement dénommée tall oil, est ainsi un sous-produit liquide du procédé Kraft de transformation du bois. L'huile de tall est essentiellement obtenue lors de l'utilisation de bois résineux (conifères) dans le procédé Kraft. Les produits issus de la distillation du l'huile de tall brute sont généralement utilisés comme bases dans l'industrie chimique et pour la fabrication de colles et adhésifs.

Une huile de tall brute moyenne a un indice d'acide (TAN : total acid number, en mg de KOH par g de produit) compris entre 30 et 100, plus généralement entre 50 et 80 (bornes comprises).

Lorsqu'elle est chauffée, l'huile de tall brute peut être séparée (par distillation) pour obtenir les coupes suivantes (de la coupe la plus légère à la coupe la plus lourde) :
- une huile légère (tête de colonne)
- des acides gras (TOFA),
- une huile de tall distillée (« distilled tall oil » DTO), mélange d'acides gras et d'acides résiniques,
- des acides résiniques (colophane ou « rosin » en anglais),
- une phase lourde ou résidu, qui ne peut être distillée, appelée poix d'huile de tall (tall oil pitch). La poix d'huile de tall contient une faible quantité d'acides gras et d'acides résiniques et une quantité notable d'insaponifiables.

### Poix d'huile de tall

Tel que décrit ci-dessus, la poix d'huile de tall est un produit provenant de la fabrication du papier par le procédé Kraft, notamment à partir de bois résineux. Il s'agit du résidu provenant du fractionnement d'huile de tall brute obtenue par transformation de bois résineux selon le procédé Kraft.

L'expression « poix d'huile de tall » désigne ainsi la partie non-distillable ou non-volatile qui reste après une distillation conventionnelle des acides gras, acides résiniques et fractions neutres distillables d'une huile de tall brute. Il s'agit généralement d'une substance visqueuse, brun foncé, dont les caractéristiques spécifiques varient en fonction de facteurs tels que la composition de l'huile de tall brute et le degré de distillation.

Au cours de l'étape (A), ce résidu est maintenu à une température allant de 40 à 80°C, de 40 à 75°C, de 40 à 70°C, de 45 à 65°C ou de 50 à 60°C, ou dans une gamme de températures définie par toute combinaison des limites précitées.

### Etape (B) de décantation

Au cours de l'étape (B) de décantation, la poix d'huile de tall fournie à l'étape (A) est soumise successivement à :
- une étape de refroidissement à une température allant de -20 à 25°C,
- une étape de réchauffage à une température de 35 à 70°C.

Cette étape de décantation est réalisée pendant une durée suffisante pour séparer la poix d'huile de tall en au moins une phase légère surnageante et une phase lourde plus lourde que ladite au moins une phase légère.

Avantageusement, le refroidissement peut être un refroidissement naturel, sans action extérieure : sa durée peut donc varier en fonction de la température de la poix d'huile de tall avant refroidissement, de la température extérieure et du volume à refroidir.

A l'issue de l'étape de refroidissement, la température de la poix d'huile de tall peut être de -20 à 25°C, de -15 à 25°C, de -10 à 25°C, de -5 à 25°C, de 0 à 25°C ou dans une gamme de température définie par toute combinaison des limites précitées. Toutefois, de préférence, la gamme de température peut être de 0 à 25°C.

La durée de l'étape de réchauffage de l'étape (B) de décantation peut être de 1 à 10 jours, de 1 à 9 jours, de 1 à 8 jours de 2 à 7 jours de 2 à 6 jours, de 3 à 6 jours ou d'une durée définie par toute combinaison des limites précitées.

A l'issue de l'étape de réchauffage, la température de la poix d'huile de tall peut être de 35 à 70°C, de 40 à 70°C, de 40 à 65°C, de 40 à 60°C ou dans une gamme de température définie par toute combinaison des limites précitées.

Dans un mode de réalisation, une unique phase légère et une unique phase lourde peuvent être obtenues. La phase légère peut alors représenter de 65 à 95%vol, de 70 à 95%vol, de 75 à 95%vol de 80 à 95%vol ou de 80 à 95% vol par rapport au volume restant, la phase lourde représentant le pourcentage volumique restant pour atteindre 100%vol.

Dans un autre mode de réalisation deux, trois ou quatre phases légères et phases lourdes correspondantes peuvent être récupérées.

L'étape (B) de décantation peut être réalisée dans une enceinte, par exemple fermée. Dans un mode de réalisation, l'enceinte peut présenter une forme conique ou cylindrique. Dans la mesure où il s'agit de réaliser une décantation, l'enceinte est de préférence dépourvue de tout dispositif d'agitation ou alors ce dispositif n'est pas actionné pendant la décantation. L'enceinte est en outre équipée d'un dispositif de chauffage pour la mise en œuvre de l'étape de réchauffage. Optionnellement, l'enceinte peut être équipée de moyens de refroidissement pour la mise en œuvre de l'étape de refroidissement.

L'étape (B) de décantation peut être répétée une à plusieurs fois, par exemple une fois, deux fois, trois fois, quatre fois ou cinq fois.

### Etape (C) de récupération

Au cours de cette étape, la ou les phases légères formées au cours de l'étape (B) sont séparées de la phase lourde et récupérées.

Cette récupération peut être mise en œuvre par tout moyen approprié, tel qu'un dispositif de prélèvement, par un exemple un dispositif de pompage, un dispositif de soutirages multiples ou similaire.

### Etape (D) de décantation

Au cours de l'étape (D) de décantation, la (ou les) phase(s) légère(s) récupérée(s) à l'étape (C) est (sont) soumise(s) successivement à :
- une étape de refroidissement à une température allant de -20 à 25°C,
- une étape de réchauffage à une température de 35 à 70°C.
Cette étape de décantation est réalisée pendant une durée suffisante pour séparer la (les) phase(s) légère(s) en au moins une deuxième phase légère surnageante et une deuxième phase lourde plus lourde que ladite au moins une deuxième phase légère.

Les conditions de mise en œuvre de cette étape de décantation sont similaires à celles de l'étape (B) précédemment décrite. L'étape (D) peut être réalisée dans les mêmes conditions que l'étape (B) ou dans des conditions différentes comprises dans celles décrites en référence à l'étape (B).

L'étape (D) peut être mise en œuvre dans une deuxième enceinte distincte de l'enceinte utilisée pour l'étape (B), cette deuxième enceinte présentant des caractéristiques telles que celles décrites en référence à l'étape (B).

Cette deuxième étape de décantation (D) peut être mise en œuvre au moins deux fois successivement avant la deuxième étape de récupération (E), par exemple 2, 3, 4 ou 5 fois.

### Etape (E) de récupération

Au cours de cette deuxième étape de récupération, on récupère au moins une deuxième phase légère et une deuxième phase lourde formées au cours de l'étape (D). Cette récupération peut être mise en œuvre par tout moyen approprié, tel qu'un dispositif de prélèvement, par un exemple un dispositif de pompage, un dispositif de soutirages multiples ou similaire.

Dans un mode de réalisation, chaque deuxième phase légère récupérée peut être renvoyée à l'étape (D). Chaque deuxième phase légère récupérée peut ainsi être soumise successivement aux étapes de refroidissement et de réchauffage de l'étape (D) pendant une durée suffisante pour la séparer en au moins une troisième phase légère surnageante et une troisième phase lourde plus lourde que ladite au moins une troisième phase légère, puis à l'étape de récupération (E) pour séparer et récupérer ladite au moins une troisième phase légère, ainsi que la troisième phase lourde.

### Etape (F) de filtration

Au cours de cette étape de filtration, la phase lourde récupérée à l'étape (C), la deuxième phase lourde ou la troisième phase lourde récupérées à l'étape (E), est soumise à au moins une filtration.

Dans un mode de réalisation, une phase lourde peut être soumise à 2, 3, 4 ou 5 filtrations successives.

Les filtres utilisables peuvent être des filtres de cellulose, ou équivalent, des treillis métalliques, ou une combinaison des deux. Les caractéristiques des filtres sont par exemple choisies de manière à séparer les molécules les plus lourdes ainsi que les métaux sous formes sels ou liés aux molécules hydrocarbonées des phases traitées.

Les techniques de filtration utilisables peuvent être choisies parmi des filtres métalliques, par exemple sous forme de toiles métalliques, des filtres en cellulose, par exemple des plaques cellulosiques ou des filtres cylindriques, des filtres en polyester ou polypropylène, notamment cylindriques, des média filtrant plissés profondeur.

L'étape (F) peut être réalisée à chaud, par exemple à une température de 70 à 140°C.

### EXEMPLE

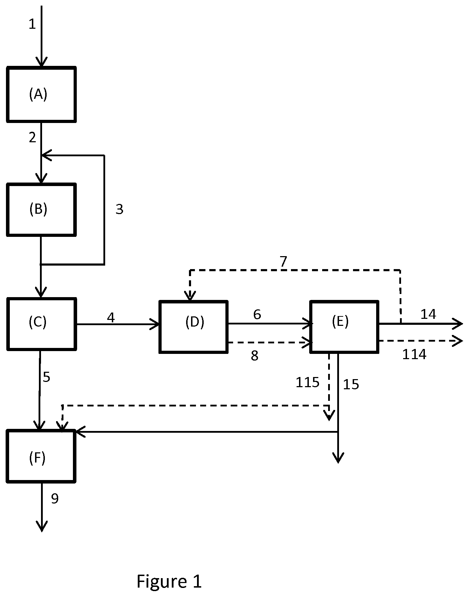

L'invention est maintenant décrite au moyen d'exemples et en référence au dessin annexé, non limitatifs, dans lequel la figure 1 représente schématiquement les étapes d'un mode de réalisation du procédé selon l'invention.

Tel que représenté sur la figure 1, au cours d'une première étape (A), on fournit de la poix d'huile de tall à une température allant de 40 à 80°C. Cette étape (A) de fourniture peut consister en une étape de chauffage de poix d'huile de tall **1** issue du fractionnement d'huile de tall brute tel que précédemment décrit. Cette étape (A) peut aussi consister en la récupération de la poix d'huile de tall directement en sortie du fractionnement d'une huile de tall.

La poix d'huile de tall chaude **2** issue de l'étape (A) est ensuite soumise à une étape de décantation (B) telle que précédemment décrite. Cette décantation peut être réalisée dans une enceinte qui peut être la même que celle utilisée pour chauffer la poix d'huile de tall à l'étape (A) ou pour stocker la poix d'huile de tall récupérée directement en sortie du fractionnement de l'huile de tall brute ou être une autre enceinte.

Cette étape (B) peut être réitérée tel que représenté schématiquement par la ligne **3** sur la figure. Autrement dit, les étapes de refroidissement et réchauffage de l'étape de décantation (B) peuvent être réalisées au moins une autre fois successivement. A la suite de cette étape de décantation (B), on récupère au cours de l'étape (C) une phase légère **4** et une phase lourde **5.**

Dans une variante, la phase légère **4** peut être soumise à nouveau à l'étape de décantation (D) puis, via la ligne **7**, à l'étape de récupération (E) précédemment décrites. Cette étape de décantation (D) peut être réitérée comme l'étape (B) (non représenté sur la figure à des fins de clarté). L'étape de récupération (E) permet de récupérer une deuxième phase légère **14** et une deuxième phase lourde **15.**

Dans une variante, la deuxième phase lourde **15** peut être renvoyée en entrée de l'étape de décantation (D) via la ligne **7** puis être soumise à l'étape de récupération (E) via la ligne **8** permettant de récupérer une troisième phase légère **114** et une troisième phase lourde **115.**

La phase lourde **5** peut être envoyée à une étape de filtration (F) permettant de récupérer une phase lourde **9** à teneur en cendres réduites. De manière similaire, les deuxième et troisième phases lourdes **15, 115** peuvent être envoyées à l'étape de filtration (F).

### Exemple 1

Un échantillon de poix d'huile de tall présentant une température de 60°C et d'un volume de 2 litres est soumis à une décantation au cours de laquelle il est refroidit naturellement jusqu'à atteindre une température de 5°C, puis il est réchauffé à 50°C, la durée de réchauffage étant de 5 jours.

Après cette étape de décantation, 75% du volume de la phase supérieure (surnageante) formant une phase légère, est prélevé, et les 25% en volume restant, formant une phase lourde, sont récupérés.

Le tableau 1 rassemble les caractéristiques physico-chimiques de l'échantillon de poix d'huile de tall avant traitement, de la phase légère et de la phase lourde.

**Tableau 1**

| | Norme | *Unités* | Poix d'huile de tall avant traitement | Phase légère | Phase lourde |
|---|---|---|---|---|---|
| Viscosité à 100°C | NF EN ISO 3104:1994 | *mm²*/s | 37,22 | 24,42 | 23,78 |
| Viscosité à 50°C | NF EN ISO 3104 : 1994 | *mm²*/s | | 225,5 | 227,8 |
| Viscosité à 20°C | NF EN ISO 3104 : 1994 | *mm²*/s | | 455,2 | |
| Masse volumique à 15°C | NF EN ISO 12185 :1996 | *kg*/*m³* | 983,8 | 983,1 | 989,4 |
| Teneur en cendres | NF EN ISO 6245:2001 | %*m* | 0,24 | 0.09 | 0,672 |
| Point d'écoulemen t | ISO 3016 :1994 | °*C* | | 15 | |

On constate que la teneur en cendres de la phase légère est réduite de 86,6% par rapport à la teneur en cendres de la phase lourde et de 62,5% par rapport à la teneur en cendres de la poix d'huile de tall non traitée.

A titre de comparaison, le tableau 2 rassemble les caractéristiques physico-chimiques d'un fioul TBTS (Très Basse Teneur en Soufre), non additivé.

**Tableau 2**

| | Norme | *Unités* | Fioul TBTS |
|---|---|---|---|
| Masse volumique à 15°C | NF EN ISO 12185 :1996 | *kg*/*m³* | 940 à 1050 typique |
| Point d'écoulement | ISO3016 :1994 | °*C* | 3 typique |
| Viscosité à 20°C | NF EN ISO 3104 :1994 | *cSt* | |
| Viscosité à 50°C | NF EN ISO 3104: 1994 | *cSt* | 450 typique |
| Viscosité à 100°C | NF EN ISO 3104:1994 | *cSt* | <40 (*) |
| Point éclair | NF EN ISO 2719 | °*C* | >70 (*) |
| PCI | NFM 07030 | *MJ*/*kg* | 39 typique |
| Teneur en cendres | NF EN ISO 6245 :2001 | %m | 0,04 |
| Teneur en carbone | ASTM D5291 | %m | 88 typique |
| Teneur en Azote | ASTM D5762 | %m | 0,35 |
| Teneur en soufre | NF EN ISO 20846 | *mg*/*kg* | < 10000 (*) |
| Teneur en eau | NF EN ISO 12937 | %m | <0,6 (*) |
| Indice d'acide | ASTM D 664A | *mgKOH*/*g* | <1 |

| | | | |
|---|---|---|---|
| (*) : spécifications imposées par la CSR 500 pour un fioul lourd. Ces spécifications sont établies par la Chambre Syndicale du Raffinage en France. | | | |

## Revendications

1. Procédé de traitement de poix d'huile de tall comprenant :
(A) une étape de fourniture de poix d'huile de tall à une température allant de 40 à 80°C,
(B) au moins une étape de décantation au cours de laquelle la poix d'huile de tall fournie à l'étape (A) est soumise successivement à :
- une étape de refroidissement à une température allant de - 20 à 25°C,
- une étape de réchauffage à une température de 35 à 70°C, pendant une durée suffisante pour séparer la poix d'huile de tall en au moins une phase légère surnageante et une phase lourde plus lourde que ladite au moins une phase légère,
(C) une étape de récupération de ladite au moins une phase légère et de la phase lourde formées au cours de l'étape (B), ladite au moins une phase légère constituant une poix d'huile de tall traitée.

2. Procédé de traitement selon la revendication 1, dans lequel l'étape (B) est mise en œuvre au moins deux fois successivement avant l'étape de récupération (C).

3. Procédé de traitement selon l'une des revendications 1 ou 2, comprenant :
(D) au moins une deuxième étape de décantation au cours de laquelle ladite au moins une phase légère séparée à l'étape (C) est soumise successivement à :
- une étape de refroidissement à une température allant de -20 à 25°C,
- une étape de réchauffage à une température de 35 à 70°C, pendant une durée suffisante pour séparer ladite au moins une phase légère en au moins une deuxième phase légère surnageante et une deuxième phase lourde plus lourde que ladite au moins une deuxième phase légère,
(E) une deuxième étape de récupération de ladite au moins une deuxième phase légère et de la deuxième phase lourde formées au cours de l'étape (D), ladite au moins une deuxième phase légère constituant une poix d'huile de tall traitée.

4. Procédé de traitement selon la revendication 3, dans lequel la deuxième étape de décantation (D) est mise en œuvre au moins deux fois successivement avant la deuxième étape de récupération (E).

5. Procédé de traitement selon la revendication 3 ou 4, dans lequel ladite au moins une deuxième phase légère est soumise successivement aux étapes de refroidissement et de réchauffage de l'étape (D) pendant une durée suffisante pour séparer ladite au moins une deuxième phase légère en au moins une troisième phase légère surnageante et une troisième phase lourde plus lourde que ladite au moins une troisième phase légère, puis à l'étape de récupération (E) pour récupérer ladite au moins une troisième phase légère et ladite troisième phase lourde.

6. Procédé de traitement selon l'une quelconque des revendications 1 à 5, dans laquelle la phase lourde récupérée à l'étape (C), la deuxième phase lourde ou la troisième phase lourde récupérées à l'étape (E), est soumise à au moins une étape (F) de filtration.

7. Composition combustible, notamment liquide, comprenant de 70 à 100% en masse de poix d'huile de tall, cette poix d'huile de tall étant constituée d'une phase légère obtenue par le procédé de traitement selon l'une quelconque des revendications 1 à 6 et présentant :
- une teneur en cendres inférieure ou égale à 0,18%m mesurée suivant la norme NF EN ISO 6245 :2001,
- et au moins une des caractéristiques suivantes :
- une viscosité cinématique à 100°C de 21 à 30 mm²/s mesurée suivant la norme NF EN ISO 3104 :1994,
- une viscosité cinématique à 50°C de 220 à 227 mm²/s mesurée suivant la norme NF EN ISO 3104 :1994,
- une viscosité cinématique à 20°C de 450 à 460 mm²/s mesurée suivant la norme NF EN ISO 3104 :1994,
- une masse volumique à 15°C de 979 à 987 kg/m³ mesurée suivant la norme NF EN ISO 12185 :1996,
- un point d'écoulement de 10 à 20°C mesuré suivant la norme ISO 3116 :1994.

8. Composition combustible, notamment liquide, selon la revendication 7 lorsqu'elle ne contient pas 100%m de ladite poix d'huile de tall, comprenant pour atteindre 100%m une ou plusieurs coupes plus légères que ladite poix d'huile de tall issues du traitement de l'huile de tall, un ou plusieurs additifs ou leurs mélanges.

9. Composition combustible, notamment liquide, selon la revendication 8, dans laquelle la teneur totale de la composition combustible en additifs est de 0,01 à 0,5%m.

10. Utilisation comme combustible d'une composition comprenant de 70 à 100 % en masse de poix d'huile de tall, cette poix d'huile de tall étant constituée d'une phase légère obtenue par le procédé de traitement selon l'une quelconque des revendications 1 à 6 et présentant :
- une teneur en cendres inférieure ou égale à 0,18%m mesurée suivant la norme NF EN ISO 6245 :2001,
- et au moins une des caractéristiques suivantes :
- une viscosité cinématique à 100°C de 21 à 30 mm²/s mesurée suivant la norme NF EN ISO 3104 :1994,
- une viscosité cinématique à 50°C de 220 à 227 mm²/s mesurée suivant la norme NF EN ISO 3104 :1994,
- une viscosité cinématique à 20°C de 450 à 460 mm²/s mesurée suivant la norme NF EN ISO 3104 :1994,
- une masse volumique à 15°C de 979 à 987 kg/m³ mesurée suivant la norme NF EN ISO 12185 :1996,
- un point d'écoulement de 10 à 20°C mesuré suivant la norme ISO 3116 :1994.

11. Utilisation selon la revendication 10, dans laquelle lorsqu'elle ne contient pas 100%m de ladite poix d'huile de tall, la composition utilisée comme combustible comprend pour atteindre 100%m une ou plusieurs coupes plus légères que ladite poix d'huile de tall issues du traitement de l'huile de tall, un ou plusieurs additifs ou leurs mélanges.

12. Utilisation selon la revendication 11, dans laquelle la teneur totale en additifs de la composition utilisée comme combustible est de 0,01 à 0,5%m.

13. Procédé de combustion d'un combustible dans une installation de combustion, dans laquelle on brûle une composition combustible selon l'une quelconque des revendications 7 à 9.

## Patentansprüche

1. Verfahren zur Behandlung von Tallölpech, umfassend:
(A) einen Schritt des Bereitstellens von Tallölpech auf einer Temperatur im Bereich von 40 bis 80 °C,
(B) mindestens einen Schritt des Dekantierens, in dessen Verlauf das im Schritt (A) bereitgestellte Tallölpech nacheinander unterzogen wird:
- einem Schritt des Kühlens auf eine Temperatur im Bereich von -20 bis 25 °C,
- einem Schritt des Erhitzens auf eine Temperatur von 35 bis 70 °C während einer Dauer, die ausreicht, um das Tallölpech in mindestens eine überstehende leichte Phase und eine schwere Phase zu trennen, welche schwerer ist als die mindestens eine leichte Phase,
(C) einen Schritt des Gewinnens der mindestens einen leichten Phase und der schweren Phase, die im Verlauf des Schritts (B) gebildet wurden, wobei die mindestens eine leichte Phase ein behandeltes Tallölpech darstellt.

2. Behandlungsverfahren nach Anspruch 1, wobei der Schritt (B) vor dem Gewinnungsschritt (C) mindestens zwei Mal nacheinander ausgeführt wird.

3. Behandlungsverfahren nach einem der Ansprüche 1 oder 2, umfassend:
(D) mindestens einen zweiten Dekantierschritt, in dessen Verlauf die mindestens eine im Schritt (C) abgetrennte leichte Phase nacheinander unterzogen wird:
- einem Schritt des Kühlens auf eine Temperatur im Bereich von -20 bis 25 °C,
- einem Schritt des Erhitzens auf eine Temperatur von 35 bis 70 °C während einer Dauer, die ausreicht, um die mindestens eine leichte Phase in mindestens eine zweite überstehende leichte Phase und eine zweite schwere Phase zu trennen, welche schwerer ist als die mindestens eine zweite leichte Phase,
(E) einen zweiten Schritt des Gewinnens der mindestens einen zweiten leichten Phase und der zweiten schweren Phase, die im Verlauf des Schritts (D) gebildet wurden, wobei die mindestens eine zweite leichte Phase ein behandeltes Tallölpech darstellt.

4. Behandlungsverfahren nach Anspruch 3, wobei der zweite Dekantierschritt (D) vor dem zweiten Gewinnungsschritt (E) mindestens zwei Mal nacheinander ausgeführt wird.

5. Behandlungsverfahren nach Anspruch 3 oder 4, wobei die mindestens eine zweite leichte Phase nacheinander den Kühl- und Erhitzungsschritten aus Schritt (D) während einer Dauer, die ausreicht, um die mindestens eine zweite leichte Phase in mindestens eine dritte überstehende leichte Phase und eine dritte schwere Phase zu trennen, die schwerer ist als die mindestens eine dritte leichte Phase, und anschließend dem Gewinnungsschritt (E) unterzogen wird, um die mindestens eine dritte leichte Phase und die dritte schwere Phase zu gewinnen.

6. Behandlungsverfahren nach einem der Ansprüche 1 bis 5, wobei die schwere Phase, die im Schritt (C) gewonnen wurde, die zweite schwere Phase oder die dritte schwere Phase, die im Schritt (E) gewonnen wurden, mindestens einem Schritt (F) des Filtrierens unterzogen wird.

7. Brennstoffzusammensetzung, insbesondere flüssige, die 70 bis 100 Masse-% Tallölpech umfasst, wobei dieses Tallölpech aus einer leichten Phase besteht, die über das Behandlungsverfahren nach einem der Ansprüche 1 bis 6 erhalten wird und aufweist:
- einen Aschegehalt von kleiner oder gleich 0,18 Ma%, gemessen nach der Norm NF EN ISO 6245:2001,
- und mindestens eine der folgenden Eigenschaften:
- eine kinematische Viskosität bei 100 °C von 21 bis 30 mm²/s, gemessen nach der Norm NF EN ISO 3104:1994,
- eine kinematische Viskosität bei 50 °C von 220 bis 227 mm²/s, gemessen nach der Norm NF EN ISO 3104:1994,
- eine kinematische Viskosität bei 20 °C von 450 bis 460 mm²/s, gemessen nach der Norm NF EN ISO 3104:1994,
- eine Dichte bei 15 °C von 979 bis 987 kg/m³, gemessen nach der Norm NF EN ISO 12185:1996,
- einen Pourpoint von 10 bis 20 °C, gemessen nach der Norm ISO 3116:1994.

8. Brennstoffzusammensetzung, insbesondere flüssige, nach Anspruch 7, die, wenn sie nicht 100 Ma% des Tallölpechs enthält, einen oder mehrere aus der Behandlung des Tallöls stammende Schnitte, die leichter sind als das Tallölpech, einen oder mehrere Zusatzstoffe oder deren Mischungen umfasst, um 100 Ma% zu erreichen.

9. Brennstoffzusammensetzung, insbesondere flüssige, nach Anspruch 8, wobei der Gesamtgehalt der Brennstoffzusammensetzung an Zusatzstoffen 0,01 bis 0,5 Ma% beträgt.

10. Verwendung einer 70 bis 100 Masse-% Tallölpech umfassenden Zusammensetzung als Brennstoff, wobei dieses Tallölpech aus einer leichten Phase besteht, die über das Behandlungsverfahren nach einem der Ansprüche 1 bis 6 erhalten wurde und aufweist:
- einen Aschegehalt von kleiner oder gleich 0,18 Ma%, gemessen nach der Norm NF EN ISO 6245:2001,
- und mindestens eine der folgenden Eigenschaften:
- eine kinematische Viskosität bei 100 °C von 21 bis 30 mm²/s, gemessen nach der Norm NF EN ISO 3104:1994,
- eine kinematische Viskosität bei 50 °C von 220 bis 227 mm²/s, gemessen nach der Norm NF EN ISO 3104:1994,
- eine kinematische Viskosität bei 20 °C von 450 bis 460 mm²/s, gemessen nach der Norm NF EN ISO 3104:1994,
- eine Dichte bei 15 °C von 979 bis 987 kg/m³, gemessen nach der Norm NF EN ISO 12185:1996,
- einen Pourpoint von 10 bis 20 °C, gemessen nach der Norm ISO 3116:1994.

11. Verwendung nach Anspruch 10, wobei die als Brennstoff verwendete Zusammensetzung, wenn sie nicht 100 Ma% des Tallölpechs enthält, einen oder mehrere aus der Behandlung des Tallöls stammende Schnitte, die leichter sind als das Tallölpech, einen oder mehrere Zusatzstoffe oder deren Mischungen umfasst, um 100 Ma% zu erreichen.

12. Verwendung nach Anspruch 11, wobei der Gesamtgehalt der als Brennstoff verwendeten Zusammensetzung an Zusatzstoffen 0,01 bis 0,5 Ma% beträgt.

13. Verfahren zur Verbrennung eines Brennstoffs in einer Verbrennungsanlage, wobei eine Brennstoffzusammensetzung nach einem der Ansprüche 7 bis 9 verbrannt wird.

## Claims

1. Process for processing tall oil pitch comprising:
(A) a step of providing tall oil pitch at a temperature from 40 to 80°C,
(B) at least one decanting step during which the tall oil pitch provided in step (A) is successively subjected to:
- a step of cooling to a temperature from -20 to 25°C,
- a step of heating to a temperature of 35 to 70°C, for a sufficient duration to separate the tall oil pitch into at least one supernatant light phase and a heavy phase heavier than said at least one light phase,
(C) a step of recovering said at least one light phase and the heavy phase formed during step (B), said at least one light phase constituting a processed tall oil pitch.

2. Processing process according to claim 1, wherein step (B) is implemented at least twice successively before the recovery step (C).

3. Processing process according to one of claims 1 or 2, comprising:
(D) at least one second decanting step during which said at least one light phase separated in step (C) is successively subjected to:
- a step of cooling to a temperature from -20 to 25°C,
- a step of heating to a temperature of 35 to 70°C, for a sufficient duration to separate said at least one light phase into at least one second supernatant light phase and a second heavy phase, heavier than said at least one second light phase,
(E) a second step of recovering said at least one second light phase and the second heavy phase formed during step (D), said at least one second light phase constituting a processed tall oil pitch.

4. Processing process according to claim 3, wherein the second decanting step (D) is implemented at least twice successively before the second recovery step (E).

5. Processing process according to claim 3 or 4, wherein said at least one second light phase is successively subjected to the cooling and heating steps of step (D) for a sufficient duration to separate said at least one second light phase into at least one third supernatant light phase and a third heavy phase heavier than said at least one third light phase, then to the recovery step (E) to recover said at least one third light phase and said third heavy phase.

6. Processing process according to any one of claims 1 to 5, wherein the heavy phase recovered in step (C), the second heavy phase or the third heavy phase recovered in step (E), is subjected to at least one filtration step (F).

7. Fuel composition, in particular liquid, comprising 70 to 100% by mass of tall oil pitch, this tall oil pitch being constituted of a light phase obtained by the processing process according to any one of claims 1 to 6, and having:
- an ash content less than or equal to 0.18%m measured according to the standard NF EN ISO 6245:2001,
- and at least one of the following features:
- a kinematic viscosity at 100°C of 21 to 30mm²/s measured according to the standard NF EN ISO 3104:1994,
- a kinematic viscosity at 50°C of 220 to 227mm²/s measured according to the standard NF EN ISO 3104:1994,
- a kinematic viscosity at 20°C of 450 to 460mm²/s measured according to the standard NF EN ISO 3104:1994,
- a density at 15°C of 979 to 987kg/m³ measured according to the standard NF EN ISO 12185:1996,
- a pour point of 10 to 20°C measured according to the standard ISO 3116:1994.

8. Fuel composition, in particular liquid, according to claim 7 when it does not contain 100%m of said tall oil pitch, comprising to reach 100%m one or more cut-outs lighter than said tall oil pitch from the processing of the tall oil, one or more additives of the mixtures thereof.

9. Fuel composition, in particular liquid, according to claim 8, wherein the total additive content of the fuel composition is 0.01 to 0.5%m.

10. Use as fuel of a composition comprising 70 to 100% by mass of tall oil pitch, this tall oil pitch being constituted of a light phase obtained by the processing process according to any one of claims 1 to 6 and having:
- an ash content less than or equal to 0.18%m measured according to the standard NF EN ISO 6245:2001,
- and at least one of the following features:
- a kinematic viscosity at 100°C of 21 to 30mm²/s measured according to the standard NF EN ISO 3104:1994,
- a kinematic viscosity at 50°C of 220 to 227mm²/s measured according to the standard NF EN ISO 3104:1994,
- a kinematic viscosity at 20°C of 450 to 460mm²/s measured according to the standard NF EN ISO 3104:1994,
- a density at 15°C of 979 to 987kg/m³ measured according to the standard NF EN ISO 12185:1996,
- a pour point of 10 to 20°C measured according to the standard ISO 3116:1994.

11. Use according to claim 10, wherein when it does not contain 100%m of said tall oil pitch, the composition used as fuel comprises to reach 100%m one or more cut-outs lighter than said tall oil pitch from the processing of the tall oil, one or more additives or the mixtures thereof.

12. Use according to claim 11, wherein the total additive content of the composition used as fuel is 0.01 to 0.5%m.

13. Process for combusting a fuel in a combustion installation, wherein a fuel composition is burned according to any one of claims 7 to 9.
